# EUROPÄISCHE PATENTSCHRIFT

(11) **EP 0 803 676 B1**
(45) Veröffentlichungstag und Bekanntmachung des Hinweises auf die Patenterteilung: **26.09.2001**
(21) Anmeldenummer: 96106347.6
(22) Anmeldetag: 23.04.1996
(51) Int. Cl.: F16L 37/38, F16L 37/24, F16L 37/14

(54) **Schnellkupplung für die Verbindung von Schlauch- und Rohrleitungen**
Quick connect coupling joint for hoses and pipelines
Raccord rapide pour tuyaux flexibles ou canalisations

(43) Veröffentlichungstag der Anmeldung: 29.10.1997
(73) Patentinhaber: Heilmann, Christian, 70597 Stuttgart (DE)
(72) Erfinder: Heilmann, Christian, 70597 Stuttgart (DE)

(56) Entgegenhaltungen:
- DE-A- 1 902 986
- US-A- 3 336 944
- US-A- 3 643 695
- US-A- 4 667 925

## Beschreibung

Schnellkupplungen mit diesen Merkmalen sind **bekannt** aus **DE-C-1902986, US-2,913,263** und **US-3,336,944.** Die wesentliche Eigenschaft dieser Schnellkupplungen besteht darin, zwischen einer Muffe (weiblicher Teil) und einem Stecker (männlicher Teil) von Hand, ohne Zuhilfenahme eines Werkzeuges, eine schnelle Verbindung zu schaffen, die in gleicher Weise wieder schnell gelöst werden kann. Die Muffe ist meistens stationär, z. B. am Druckluftnetz, der Stecker meistens am Druckluftwerkzeug oder an dem zugehörigem Schlauch montiert. Schnellkupplungen sind Massenartikel und ersetzen weitgehend die Verbindung Schlauchtülle, Schlauch und Schlauchschelle. Vorrangig kommen Schnellkupplungen in der Pneumatik, insbesondere der Drucklufttechnik, und in der Hydraulik, bspw. Chemietechnik, zur Anwendung. Als Verriegelungselement zur Arretierung des Steckers mit der Muffe dienen zwei, zylindrische, Verriegelungsstifte aus Stahl. Diese werden in den, ca. 45° zur Mittelachse des Muffenkörpers eingebrachten, Schlitzen geführt. Die Verriegelungsstifte ragen in ihrer Gesamtlänge über den Außendurchmesser des Muffenkörpers hinaus und können, von der auf dem Muffenkörper axial verschiebbaren Hülse, schräg zur Mittelachse bewegt werden. Die den Muffenkörper umschließende Druckfeder drückt über einen Druckring derart auf die Verriegelungsstifte, dass sich diese aufeinander zu bewegen, und zwar auf einen Abstand der etwa dem Durchmesser der Steckernut entspricht. **Vorteil** dieser Verriegelung ist die einfache Verwirklichung der sogenannten Einhandbedienung; d.h. der Stecker kann, mit einer Hand, ohne dass die Hülse mit der zweiten Hand zurückgezogen werden muss, in die Muffe eingeschoben und verriegelt werden. Beim Entkuppeln wird die Hülse von Hand gegen die Federkraft bewegt. Dabei werden die Verriegelungsstifte auf ihren größtmöglichen Abstand verschoben, welcher größer ist, als der Durchmesser des Steckerwulstes. Der Stecker ist dann wieder freigegeben. Die Arretierung mittels Verriegelungsstifte ist eine besonders wirtschaftliche Lösung gegenüber anderen bekannten Verriegelungsarten, z.B. der Kugelverriegelung bspw. aus **DE-OS- 2558650.** Bei dieser Kugelverriegelung muss beim Herausziehen des Steckers extra eine Distanzhülse unter die Kugeln geschoben werden, um die erwünschte Einhandbedienung zu realisieren. In **US-4,198,080** wird auf diese Hülse verzichtet mit dem Nachteil, dass man hier beide Hände zum Verriegeln braucht.

Aus **DE-OS-1250698** ist eine Schnellkupplung mit Kugelverriegelung bekannt wo verschiedenartige Stecker in die Muffe passen, mit dem Nachteil wie obige DE-OS 2558650 der zusätzlichen Distanzhülse unter den Kugeln. Das Einbringen der radialen Kugelbohrungen bei Muffenkörpern aus Metall ist wirtschaftlich sehr aufwendig, da es ein zusätzlicher Arbeitsgang ist. Wäre der Muffenkörpern aus Kunststoff, dann würden sich bei hoher Belastung die Kugeln in die Kugelbohrungen eindrücken. **Nachteil** aller oben genannten Schnellkupplungen mit Ausnahme von OS-1250698 ist, dass in einen Muffenkörper immer nur ein bestimmter Steckertyp passt, da der Muffenkörper immer dem jeweiligen Steckerprofil individuell angepasst ist. So ist bei einer Vielzahl von Steckerprofilen eine gleich große Zahl von Muffenkörpern notwendig. Bei bekannten Schnellkupplungen mit Verriegelungsstiften ist besonders **nachteilig** die an der Innenbohrung des Muffenkörpers angebrachte Umfangsnut für den Dichtring. Diese Nut ist bei der Herstellung eines Muffenkörpers aus Kunststoff im Spritzgusswerkzeug wegen der Hinterschneidung nicht entformbar.

Auch vom gesamten europäischen Markt her bspw. von der Fa. FESTO in Deutschland, sind Schnellkupplungen mit Verriegelungsstiften obiger Ansprüche **bekannt**. Diese Schnellkupplungen haben hohlzylindrische Muffenkörper, überwiegend aus Metall, seltener aus Kunststoff, mit Schrägschlitzen für die Verriegelungsstifte. Die Schrägschlitze der Metallmuffenkörper werden mittels eines Scheibenfräsers in den Hohlzylinder gefräst. Ein solcher Schlitz durchdringt den Muffenkörper sowohl in Richtung längst der Mittelachse der Verriegelungsstifte, als auch in Richtung der unter ca. 45° liegenden Schrägachse. Auch die bekannten Kunststoffmuffenkörper haben zwei, den Muffenkörper durchdringende Schrägschlitze, gleichartig wie spanend mittels eines Scheibenfräsers, hergestellte Metallmuffenkörper. **Nachteilig** wirkt sich hier das Durchdringen des Muffenkörpers durch die Schrägschlitze bis zum Mantelumfang aus, da dies zu einer starken Schwächung dieses Körpers führt. Bei Kunststoff macht sich dieser Nachteil wesentlich stärker als bei Metall bemerkbar. Diese Schnellkupplungen haben ebenfalls den Nachteil, dass der Muffenkörper im Aufnahmedurchmesser und zugehöriger Länge des Steckerprofils jeweils dem entsprechenden Steckertyp angepasst werden muss. Ein weiterer **Nachteil** ist, dass die an der Innenbohrung des Muffenkörpers angebrachte Nut für den Dichtring spanend hergestellt werden muss. Dieser Hinterstich ist bei Metall teuer, und bei Kunststoff wie schon oben begründet, nicht entformbar. Ein weiterer **Nachteil** bei bekannten Schnellkupplungen mit Muffenkörpern aus Kunststoff ist, dass sich die Verriegelungsstifte, besonders bei hohen Drücken und bei pulsierender Belastung, in die Schrägschlitze des Muffenkörpers eindrücken und bleibende Verformungen hervorrufen, die zu Funktionsmängeln führen.

**Bekannt** sind auch Schnellkupplungen mit den Merkmalen dieser Erfindung nach **DE-OS 2705319**, wo für drei unterschiedliche Steckerprofile (hier Einsteckarmaturen genannt) eine Muffe (hier Steckkupplungsventil genannt) vorgeschlagen wird. **Vorteilhaft** ist hier die Anpassungsfähigkeit des Muffenkörpers an drei unterschiedliche Stecker. **Nachteilig** ist hier der komplexe Aufbau durch sehr viele Einzelteile und somit größeres Bauvolumen. Weiterer **Nachteil** ist, dass nur in sehr begrenzten Umfang unterschiedliche Steckerprofile in die gleiche Muffe kuppelbar sind. Haben z.B. die Stecker am vorderen Zylinder, der zum Abdichten in dem Muffenkörper dient, einen unterschiedlichen Durchmesser, so passen diese Stecker nicht mehr in den gleichen Muffenkörper (hier Ventilgehäuse genannt). Weitere **Nachteile** sind, dass die Hinterschneidung für den Dichtring in einem aus Kunststoff hergestellten Muffenkörper spanend eingebracht werden muss, und dass sich die Verriegelungsstifte bei hoher Druckbelastung in die Schrägschlitze eindrücken.

Durch länderspezifische Entwicklungen in der Vergangenheit sind unterschiedliche Steckerprofile **bekannt.** Fünf verschiedene Steckerprofile sind Gegenstand dieser Erfindung. So hat sich das Steckerprofil, hier Typ I genannt, besonders in Deutschland, Österreich und Osteuropa durchgesetzt und ist im **EP-B-0536434** in Fig. 2 deutlich abgebildet. Das Steckerprofil, hier Typ II genannt, ist in Skandinavien stark verbreitet. Das Steckerprofil, hier Typ III genannt, wird überwiegend beim Kuppeln von Flüssigkeitsleitungen eingesetzt. Das Steckerprofil, hier Typ IV genannt, ist nach **ISO 6150,** nach **US-Military - Norm C-4109D** und nach **AFNOR E 49-053** genormt und besonders in den USA und Frankreich stark verbreitet. Das Steckerprofil, hier Typ V genannt, ist in der Schweiz stark verbreitet und im **EP-B** **0013393** deutlich erkennbar. Diese unterschiedlichen Entwicklungen wirken sich wie folgt **nachteilig** aus: Ein Hersteller von Schnellkupplungen obiger fünf Typen muss für jedes Steckerprofil einen generell neuen Aufbau fast aller Einzelteile, insbesondere einen dem jeweiligen Steckerprofil angepassten Muffenkörper herstellen. Bei den meisten Steckerprofilen, wie im Falle dieser Erfindung, sind fünf den jeweiligen Steckerprofilen in den Durchmesser- und Längenmassen angepasste Muffenkörper notwendig. Muffenkörper aus Metall müssen, neben umfangreicher Dreharbeit, z.B. mit einer an der Innenbohrung angebrachter Umfangsnut für den Dichtringeinstich, auch noch wegen der Schrägschlitze gefräst werden. Die Herstellkosten eines Metallmuffenkörpers betragen ca. 50 % der Herstellkosten einer kompletten Schnellkupplung. Aus diesen Gründen bieten sich aus Spritzwerkzeugen gefertigte Kunststoffmuffenkörper an. Dies bedeutet jedoch, dass ein Hersteller für Schnellkupplungen, wie Gegenstand dieser Erfindung, fünf verschiedene Spritzwerkzeuge benötigen würde.

**Aufgabe der Erfindung** ist es demgegenüber eine Schnellkupplung mit den eingangs genannten vorteilhaften Merkmalen zu schaffen, die sich bei einfacher Handhabung, dadurch auszeichnen sollte, dass für alle fünf unterschiedlichen Stecker nur ein Muffenkörper gebraucht wird, ohne dafür Nachteile, wie eine Verengung des Durchflussquerschnitts oder eine größere räumliche Abmessung in Kauf nehmen zu müssen. Weiter ist es **Aufgabe der Erfindung** die bekannten Muffenkörper aus Metall mit gefrästen Schrägschlitzen durch wirtschaftlichere, aus Kunststoff gefertigte, Muffenkörper zu ersetzen, ohne dafür in Kauf nehmen zu müssen, dass sich die Verriegelungsstifte bei hoher Belastung in den Kunststoff eindrücken. Weiter ist es **Aufgabe der Erfindung**, die an der Innenbohrung des Muffenkörpers spanend hergestellte Umfangsnut für den Dichtring der bekannten Schnellkupplungen überflüssig zu machen, ohne dafür den aufwendigen Weg der Dichtring - Lagerung wie bspw. bei der Kugelverriegelung zu wählen. Eine weitere **Aufgabe der Erfindung** ist es, die Haltefunktion des Sprengrings der bekannten Lösungen, die die Hülse axial sichert, gleich in den Muffenkörper zu integrieren.

Diese Aufgabe wird durch die Merkmale des Anspruchs 1 gelöst, die weiteren Aufgaben werden durch die Merkmale der unterangeordneten Ansprüche gelöst. Ein hohlzylindrischer Adapter ist in den aus Kunststoff gefertigten Muffenkörper eingeschnappt. Dieser vorrangig aus Metall hergestellte Adapter hat den Vorzug, dass er in seinen sämtlichen Konturen, also auch den geradlinigen Aussparungen, auf einem Drehautomaten hergestellt werden kann. Das heißt, die Aussparungen für die Verriegelungsstifte und die Nocken müssen nicht in einem teuren zweiten Arbeitsgang durch Fräsen hergestellt werden, so dass bei einer Schnellkupplung entsprechend dieser Erfindung auf die gesamte Fräsarbeit verzichtet werden kann, während die Schrägschlitze der bekannten Metallmuffenkörper durch einen Scheibenfräser hergestellt werden müssen.

Die Erfindung wird nachstehend unter Bezugnahme auf die beigefügten Zeichnungen näher **beschrieben**.

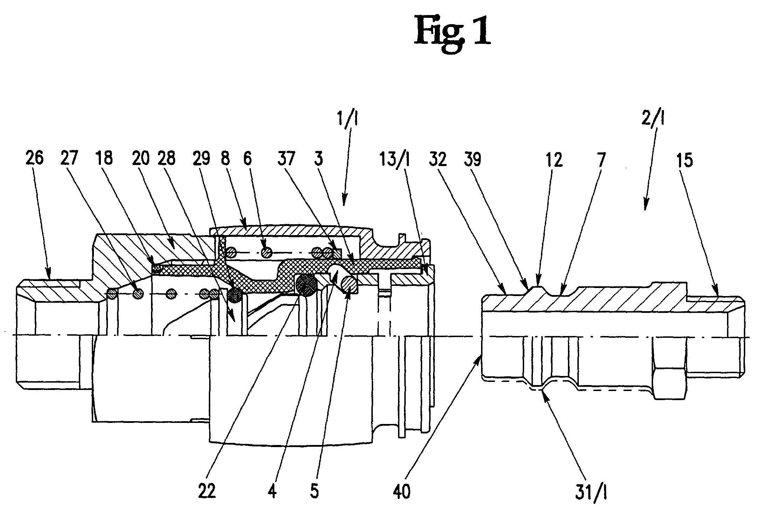

Fig. 1 zeigt eine erfindungsgemäße Schnellkupplung im entriegelten Zustand, mit dem zugehörigen Steckertyp I im Halbschnitt.

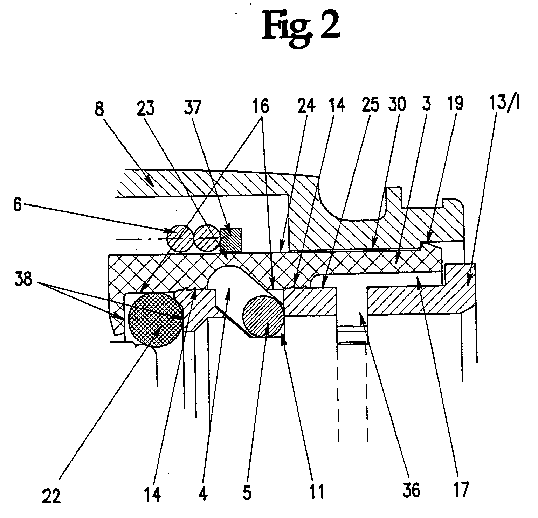

Fig. 2 zeigt eine stark vergrößerte Detailansicht aus Fig. 1.

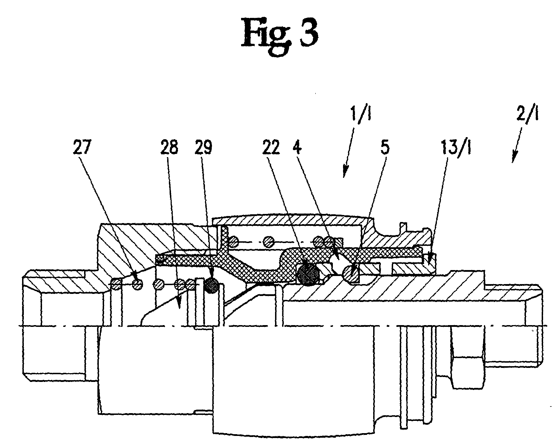

Fig. 3 zeigt eine erfindungsgemäße Schnellkupplung im verriegelten Zustand, mit dem Steckertyp 1 im Halbschnitt.

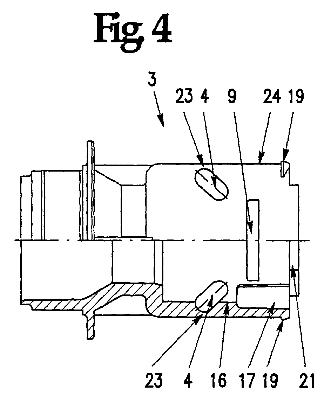

Fig. 4 zeigt einen Halbschnitt des Muffenkörpers.

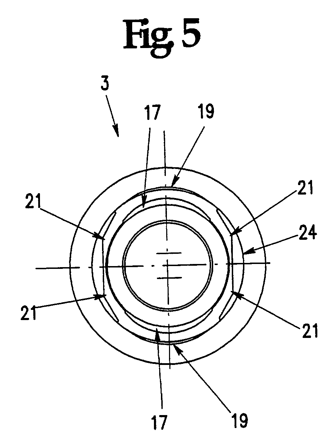

Fig. 5 zeigt eine Ansicht des Muffenkörpers in Richtung Einführungsseite des Adapters.

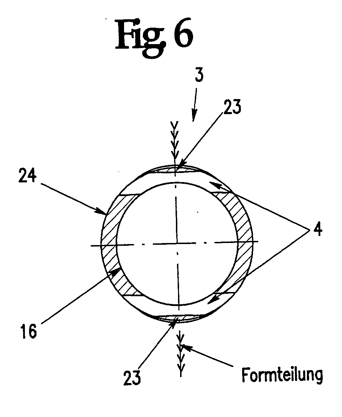

Fig. 6 zeigt einen Querschnitt durch den Muffenkörper im Bereich der Schrägschlitze.

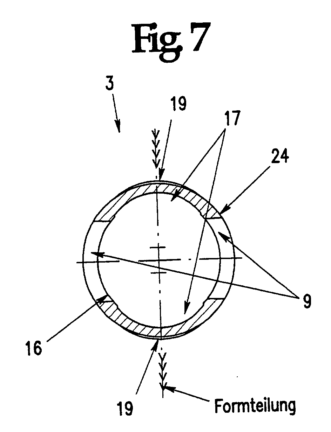

Fig. 7 zeigt einen Querschnitt durch den Muffenkörper im Bereich der Durchbrüche für die Aufnahme der Einschnappnocken.

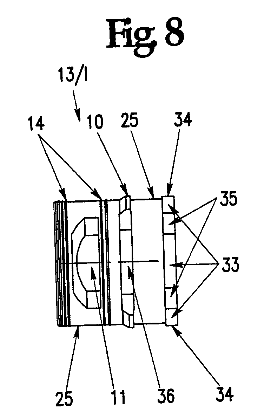

Fig. 8 zeigt die Ansicht des Adapters.

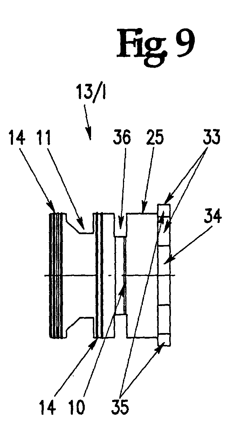

Fig. 9 zeigt die Ansicht des Adapters aus Fig. 8, jedoch 90° um seine Mittelachse verdreht.

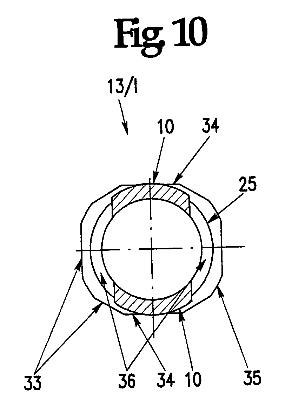

Fig. 10 zeigt einen Querschnitt des Adapters im Bereich der Einschnappnocken.
Fig. 11 zeigt die fünf verschiedenen Stecker mit den fünf verschiedenen Steckerprofilen Typ I, II, III, IV, und V, welche in den erfindungsgemäßen Muffenkörper passen.

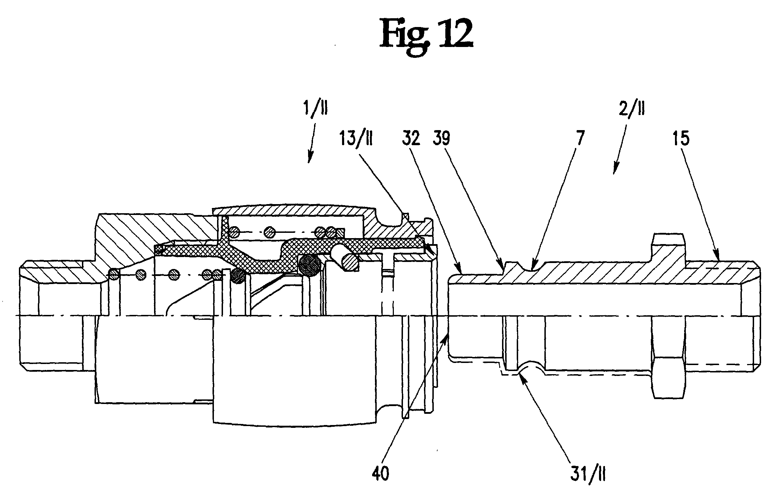

Fig. 12 zeigt eine erfindungsgemäße Schnellkupplung im entriegelten Zustand, mit dem Steckertyp II im Halbschnitt.

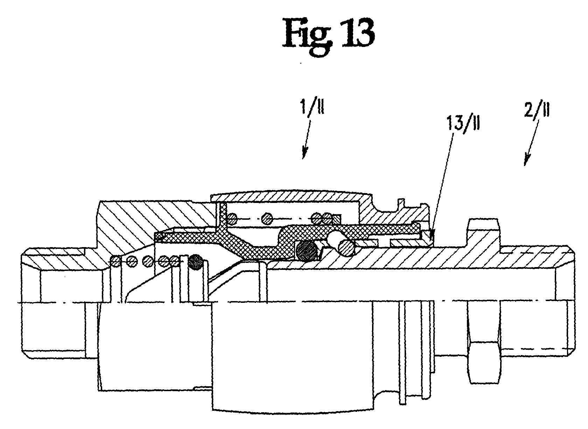

Fig. 13 zeigt eine erfindungsgemäße Schnellkupplung im verriegelten Zustand, mit dem Steckertyp II im Halbschnitt.

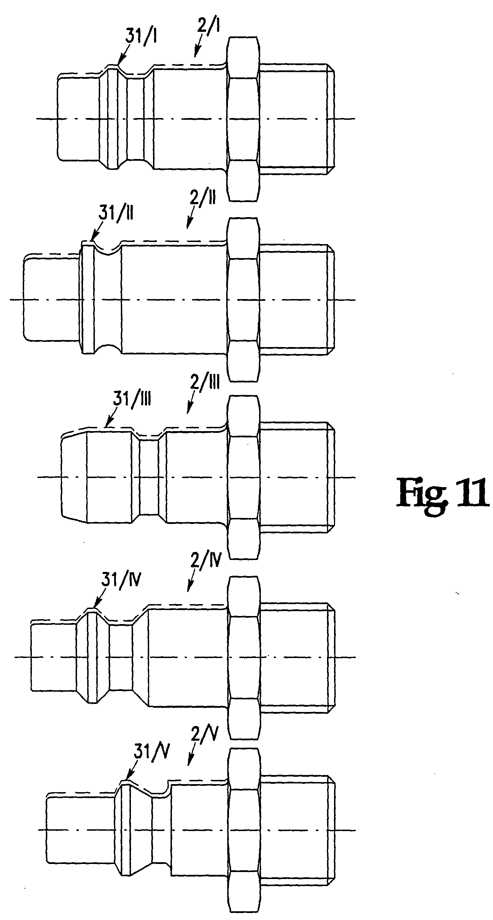

In der Zeichnung werden zwei von fünf Ausführungsbeispielen gezeigt. Die dargestellte Schnellkupplung dient der Kupplung von zwei nicht dargestellten Schlauch- oder Rohrleitungen und besteht aus einer Muffe 1/I bis 1/V und einem dieser Muffe zugeordneten Stecker 2/I bis 2/V, der abgedichtet, mit Hilfe des Dichtringes 22, in die Muffe einsteckbar ist. Der Einfachheit halber wird diese Muffe im folgenden Text nur noch mit Ziffer 1 und der Stecker nur noch mit Ziffer 2 benannt. Üblicherweise ist die Muffe 1 stationär, z.B. an eine Rohrleitung, installiert, während der Stecker 2 üblicherweise am Schlauch oder am, ebenfalls nicht dargestellten, Werkzeug montiert ist. Die Muffe 1 weist ein im wesentlichen hohlzylindrischen aus Kunststoff gespritzten Muffenkörper 3 auf, an dessen einen Ende ein Anschlussteil 20, mittels einer Dichtung 18 abgedichtet, verschraubt ist. Sowohl das Anschlussteil 20 als auch der Stecker 2 können mit den unterschiedlichsten Anschlüssen 15 bzw. 26, bspw. Innengewinde, Außengewinde oder Schlauchtülle, versehen sein. Überwiegend sind Schnellkupplungen als Schnellverschlusskupplungen ausgeführt, d.h. die Muffe hat ein, mit einem Dichtring 29 versehenes absperrendes Ventil 28, welches im entkuppelten Zustand schließt und beim Eindrücken des Steckers 2 geöffnet wird. Dieses, von einer Druckfeder 27 beaufschlagte, Ventil ist im Muffenkörper in Richtung Anschlussteil 20 angeordnet. Der Einfachheit halber wird im folgenden Text nur noch der Begriff Schnellkupplung verwendet. Außerdem ist im Muffenkörper, in Richtung Adapter (13/I bis 13/V), ein Dichtring 22 derart angeordnet, dass dieser Dichtring zwischen zwei Schultern 38, gehalten wird. Der Muffenkörper 3 ist durch die beiden, sich gegenüberliegenden, Schrägschlitze 4 derart durchbrochen, dass die Schrägschlitze zwar in Entformungsrichtung den Muffenkörper durchdringen, aber im Bereich der Formteilung eine segmentartige Brücke 23 über die Schrägschlitze 4 hinweg gebildet wird. Zusätzlich zu den beiden Schrägschlitzen sind, zwei den Hohlzylinder durchdringende Durchbrüche 9 angeordnet. Diese Durchbrüche 9 bilden, gleich wie die Schrägschlitze 4, keine Hinterschneidung, und können deshalb in einem Spritzgusswerkzeug einfach entformt werden. Ein, dem jeweiligen Steckerprofil 31/I bis 31/V konstruktiv angepasster, Adapter 13/I bis 13/V ist an der Eintrittseite des Steckers im Muffenkörper 3 angeordnet. Der Einfachheit halber wird dieser Adapter im folgenden Text nur mit Ziffer 13 und das Steckerprofil nur mit Ziffer 31 benannt. Die Adapter 13/II, 13/III, 13/IV und 13/V sind in der Zeichnung nicht extra dargestellt. Diese Adapter werden vollständig auf Drehautomaten hergestellt. Die Einschnappnocken 10 des Adapters werden durch Herausarbeiten der beiden sich gegenüberliegenden Aussparungen 36 auf einen Drehautomaten gebildet. In gleicher Weise werden auch, die sich gegenüberliegenden Aussparungen 11, für die Aufnahme der Verriegelungsstifte 5, gefertigt. Der Adapter 13 wird axial in den Muffenkörper 3 eingeschoben, so dass seine Einschnappnocken 10 in die Durchbrüche 9 einschnappen. Als weitere Variante ist ein Bajonettverschluss denkbar, in der Art, dass der Adapter 13 zuerst axial in den Muffenkörper 3 eingeschoben wird, danach durch Verdrehen des Adapters die Einschnappnocken 10 in die Durchbrüche 9 einschnappen. Nach Montage des Adapters gelangen die Aussparungen 11 in eine Flucht mit den Schrägschlitzen 4 des Muffenkörpers. Die Verriegelungsstifte 5 können somit beide Körper durchdringen. Aussparungen 11 des Adapters und Schrägschlitze 4 des Muffenkörpers bieten somit gemeinsam Funktionen für die Verriegelungsstifte 5; derart, dass die Schrägschlitze 4 die Führung, die Aussparungen 11 jedoch den Anschlag für die Zugkräfte -des Steckers 2 erfüllen. Damit der Adapter 13 nur in seiner Vorzugsstellung in den Muffenkörper 3 eingedrückt werden kann, besitzt dieser an seinem aus dem Muffenkörper herausragenden Ende ein Sechskant 33 (Schlüsselweite des Rohmaterials), bei dem die Ecken auf ein Maß 35, das zwischen der Schlüsselweite 33 und dem zugehörigen Eckmaß liegt, überdreht ist. Außerdem sind zwei Ecken noch zusätzlich abgeflacht und bilden die Flächen 34. Die Schlüsselweite der beiden Flächen 34 ist kleiner als die Schlüsselweite des Sechskants 33. Dieses sechskantartige Profil des Adapters 13 wird von dem ebenfalls sechskantartigen Vertiefungen 21 des Muffenkörpers 3 aufgenommen, und somit wird der Adapter in Vorzugsstellung gebracht. Überwiegend sollen diese Kupplungen mit Metalladapter in der Drucklufttechnik bei Drücken bis 25 bar eingesetzt werden. Aus Festigkeitsgründen kann deshalb nicht die gesamte Zugkraft des Steckers 2 über die Einschnappnocken 10 übertragen werden. Deshalb sind zur Unterstützung noch zusätzliche, am Umfang 25 des Adapters angebrachte, umlaufende schneidenartige Vorsprünge 14 angebracht. Nach dem Eindrücken des Adapters 13 in den Muffenkörper 3 dringen diese Vorsprünge in den Muffenkörper aus Kunststoff ein und bilden einen Formschluss. Nach dem der Adapter 13 in seiner Vorzugsstellung in den Muffenkörper eingepresst wurde, wird die Arretiervorrichtung montiert, d.h. es werden die Druckfeder 6, der Druckring 37 und beide Verriegelungsstifte 5 eingelegt. Die Druckfeder 6 drückt die Verriegelungsstifte 5 immer in die, vom jeweiligen Adapter 13 vorgegebene Verrieglungsstellung. Als letztes Bauteil wird die Hülse 8 mit seiner Innenbohrung 30 über die segmentartigen Erhöhungen 19 geschoben, dabei werden diese segmentartigen Erhöhungen radial nach innen in die halbkreisförmigen Ausbuchtungen 21 gedrückt und die Montage der Kupplung ist abgeschlossen. Beim Eindrücken des Steckers 2 in die Muffe 1 drückt die vordere Schrägschulter 39 des jeweiligen Steckertyps aus Fig. 11 die Verriegelungsstifte 5 derart nach außen, bis der Steckerwulst 12 beide Verriegelungsstifte 5 durchfahren hat. Gleichzeitig schiebt die vordere Planfläche 40 des Steckers das Ventil 28, gegen die Federkraft der Feder 27, in die Offenstellung. Alsdann drückt die Druckfeder 6 beide Verriegelungsstifte in die Steckernut 7 und somit ist der Stecker arretiert und gleichzeitig mit Hilfe des Dichtringes 22 abgedichtet. Zum Entriegeln wird die auf dem Muffenkörper verschiebbare Hülse 8 von Hand gegen die Verriegelungsstifte 5, Druckring 37 und Feder 6 bewegt. Dabei werden die Verriegelungsstifte 5 auf einen Abstand zueinander bewegt, welcher größer ist als der Steckerwulst 12. Der Stecker 2 ist dann wieder freigeben.

Grundsätzlich kann diese Erfindung auch bei einer beidseitig absperrenden Schnellverschlusskupplung, d.h. bei einer Kupplung mit jeweils einem Ventil in der Muffe und im Stecker, als auch bei einer Kupplung mit freiem Durchgang, d.h. einer Muffe ohne Ventil eingesetzt werden.

### Übersicht der Bezugsnummern in den Zeichnungen

### Schnellkupplung für die Verbindung von Schlauch- und Rohrleitungen

### Nr. Bezeichnung

- 1: Muffe allgemein, Muffe speziell passend zum jeweiligen Steckertyp = 1/I bis 1/V
- 2: Stecker allgemein, speziell passend zum jeweiligen Muffentyp = 2/I bis 2/V
- 3: Muffenkörper
- 4: Schrägschlitze
- 5: Verriegelungsstifte
- 6: Druckfeder unter der Hülse
- 7: Steckernut
- 8: Hülse
- 9: Durchbrüche im Muffenkörper für die Aufnahme der Einschnappnocken
- 10: Einschnappnocken des Adapters
- 11: Aussparungen im Adapter für die Aufnahme der Verriegelungsstifte
- 12: Steckerwulst
- 13: Adapter allgemein, Adapter speziell passend zum jeweiligen Steckertyp = 13/I bis 13/V
- 14: schneidenartige Vorsprünge auf dem Adapter
- 15: Anschluss für Schlauch oder Werkzeug am Stecker
- 16: Bohrung im Muffenkörper zur Aufnahme des Adapters
- 17: halbkreisförmige Ausbuchtungen im Muffenkörper
- 18: Dichtung zwischen Muffenkörper und Anschluss
- 19: segmentförmige Erhöhungen für das Überschnappen der Hülse
- 20: Anschlussteil
- 21: sechskantartige Vertiefungen im Muffenkörper zur positionsgenauen Aufnahme des Adapters
- 22: Dichtung zwischen Muffenkörper und Stecker
- 23: segmentartige Brücke über den Schrägschlitzen
- 24: äusserer Umfang des Muffenkörpers zur Aufnahme der Hülse
- 25: Aussendurchmesser des Adapters
- 26: Anschluss für Schlauch oder Rohr an der Muffe
- 27: Feder am Ventil
- 28: Ventil in der Muffe
- 29: Dichtung am Ventil
- 30: Bohrung in der Hülse
- 31: Steckerprofil des jeweiligen Steckertyps allg., speziell vom jeweiligen Steckertyp = 31/I bis V
- 32: Dichtungsdurchmesser des jeweiligen Steckertyps
- 33: Sechskantflächen des Adapters (SW des Rohmaterial)
- 34: abgeflachte Ecken des Adapters, Kleiner als die SW des Rohmaterials.
- 35: überdrehtes Eckmass der SW des Adapters
- 36: Aussparung im Adapter zur Bildung der Einschnappnocken
- 37: Druckring zwischen äusserer Druckfeder und Verriegelungsstiften
- 38: Schultern als Anlage für den Dichtring im Ventilkörper
- 39: vordere Schrägschulter des Steckers
- 40: vordere Planfläche des Steckers

## Patentansprüche

1. Schnellkupplung für die Verbindung von Schlauch- und Rohrleitungen für Druckgase und Flüssigkeiten, bestehend aus einer an eine erste Leitung anschließbaren Muffe (1), und einem an einer zweiten Leitung angeordneten, abgedichtet in der Muffe (1) aufnehmbaren Stecker (2), mit einer auf dem Muffenkörper (3) angeordneten Arretiervorrichtung aus zwei in schräg zur Mittelachse des, aus einen elastischen Material hergestellten, rohrförmigen Muffenkörpers (3) verlaufenden Schlitzen (4) geführten Verriegelungsstiften (5), die unter der Kraft einer Druckfeder (6) beim Verriegeln in die Steckernut (7) einrasten und von einer dem Muffenkörper (3) umschließenden, gegen die Kraft der Feder (6) axial verschiebbar gelagerten und mit den beiden Verriegelungsstiften (5) zusammenwirkenden Hülse (8), den Stecker (2) wieder freigeben, **dadurch gekennzeichnet, dass** in dem Muffenkörper (3) ein aus einem härterem Material als dem Material des Muffenkörpers (3) bestehender, dem jeweiligen Steckerprofil angepasster Adapter, welcher Aussparungen aufweist derart, dass diese von den Verriegelungsstiften (5) durchdrungen werden und einen Anschlag für diese bilden, angeordnet ist.

2. Schnellkupplung nach Anspruch 1, **dadurch gekennzeichnet, dass** der Muffenkörper (3), zusätzlich zu den Schrägschlitzen (4), zwei sich gegenüberliegende Durchbrüche (9) in welche die Einschnappnocken (10) des Adapters einrasten, aufweist.

3. Schnellkupplung nach Anspruch 1, **dadurch gekennzeichnet, dass** der Adapter (13) zusätzlich zu den Einschnappnocken (10), umlaufende, am Aussendurchmesser (25), in Achsrichtung gesehen, beidseitig der Aussparung (11) angeordnete, schneidenartige Vorsprünge (14) besitzt, die in die umschliessende Bohrung (16) des Muffenkörpers eindringen.

4. Schnellkupplung nach einem der vorhergehenden Ansprüche, **dadurch gekennzeichnet, dass** die Bohrung (16) im Muffenkörper für die Aufnahme des Adapters (13) im Bereich der Einführungsseite des Adapters keinen geschlossenen Kreis bildet, sondern ca. 90° versetzt zu den Durchbrüchen (9) zwei halbkreisförmige Ausbuchtungen (17) enthält.

5. Schnellkupplung nach einem der vorhergehenden Ansprüche, **dadurch gekennzeichnet, dass**, gegenüber den Ausbuchtungen (17), am äusseren Umfang (24) des Muffenkörpers im Bereich der Einführungsseite der Hülse (8), sich segmentförmige, dem äusseren Umfang (24) des Muffenkörpers überragende Erhöhungen (19) befinden, über welche die Hülse (8) bei der Montage, mit ihrer den Muffenkörper umschliessenden Bohrung (30), gedrückt wird.

6. Schnellkupplung nach einen der vorhergehenden Ansprüche, **dadurch gekennzeichnet, dass** die Schrägschlitze (4) zwar in Entformungsrichtung den Muffenkörper (3) durchdringen, aber im Bereich der Formteilung eine segmentartige Brücke (23) über die Schrägschlitze (4) hinweg gebildet wird.

7. Schnellkupplung nach einen der vorhergehenden Ansprüche, **dadurch gekennzeichnet, dass** der Muffenkörper (3) im Bereich der Einführungsseite des Adapters (13) sechskantartige, den Sechskant des Adapters aufnehmende, Vertiefungen (21) aufweist.

8. Schnellkupplung nach einen der vorhergehenden Ansprüchen, **dadurch gekennzeichnet, dass** der Adapter die für die Abdichtung zwischen Muffenkörper und Stecker notwendige Dichtung (22) axial gegen Herausfallen sichert.

9. Schnellkupplung nach Anspruch 1 bis 6 und 8, **dadurch gekennzeichnet, dass** der Adapter nicht nur in Achrichtung des Muffenkörpers (3) eingeführt wird, sondern, wie ein Bajonettverschluss, zuerst in Achsrichtung eingeführt und dann durch Verdrehung des Adapters die Einschnappnocken (10) in die Durchbrüche (9) des Muffenkörpers einrasten.

## Claims

1. Quick coupling for the connection of hose and pipings for compressed gases and liquids, consisted of a sleeve (1), connectable to a first line, and a plug (2) arranged at a second line, sealed in the sleeve (1), with a locking device located on the sleeve-body (3) of two in diagonal to the axle centre, of flexible material of manufactured, tubular sleeve-body (3) running slots (4) led lock pins (5), those under the strength of a compression spring (6) when locking into the connector groove (7) lock quick-coupler and from the sleeve body (3) enclosing against the strength of the feather/spring (6) axially adjustably stored and with the two lock pins (5) co-operating sliding-sleeve (8), the plug (2) again release, **characterised in a way,** that in the sleeve-body (3) more consisting of a harder material than the material of the sleeve-body (3), the respective male connector profile of matched adapters is arranged, which recesses it indicates in such a manner that these by the lock pins (5) are penetrated and constitute an end position for these.

2. Quick-coupler according to requirement 1, **characterised in a way** that the sleeve- body (3), additionally to the diagonal-slot (4), two opposite break-throughs (9) into which the catching cams (10) of the adapter lock themselves.

3. Quick-coupler according to requirement 1, **characterised by the fact** that the adapter (13) possesses circulating additionally to the catching cams (10), at the outside diameter (25), in oh direction seen, reciprocally the recess (11) arranged, cut-like projections/leads (14), which penetrate (16) of the sleeve body into the enclosing drilling.

4. Quick-coupler transferred after one of the preceding requirements, **thereby characterised** that the drilling (16) in the sleeve body for the accommodation of the adapter (13) within the area of the introduction page of the adapter does not form a closed set, but approx. contains 90° to the break-throughs (9) two semicircular bulges (17).

5. Quick-coupler after one of the preceding requirements, **characterised by the fact** that, opposite the bulges (17), at the outside scope (24) of the sleeve body in the area of the introduction page of the sliding sleeve (8), be located segment-shaped, outside scope (24) of the sleeve-body (3) outstanding increases (19), over which the sliding sleeve (8) when assembling, with their drilling (30), enclosing the sleeve-body (3), pressed becomes.

6. Quick-coupler after one of the preceding requirements, **characterised by the fact** that the diagonal-slots (4) penetrate the sleeve-body (3) in releasing from form direction, but in the area of the joint-face a segment like a bridge (23) is formed over the diagonal-slot (4).

7. Quick-coupler after one of the preceding requirements, **characterised by the fact** that the sleeve body (3) within the area of the introduction page of the adapter (13) hexagonal-like, the hexagonal of the adapter taking up, indicates recesses (21).

8. Quick-coupler after one of the preceding requirements, **characterised by the fact** that the adapter save the seal (22) necessary for the sealing between sleeve bodies and male connectors axially against dropping out.

9. Quick-coupler according to requirement 1 to 6 and 8, **characterised by the fact** that the adapter is not only introduced in the axis of the sleeve body (3), but as a bayonet fixing, first introduced in the axis and then by rotational twist of the adapter the catching cams (10) lock into the break-throughs (9) of the sleeve-body (3).

## Revendications

1. Accouplement rapide pour la liaison des tuyaux et les conduites des liquides et gaz comprimés, composé d'un manchon (1) raccordable à une première conduite, et d'une prise de raccord (2) à une deuxième conduite. La prise de raccord (2) est placée étanche au manchon (1), avec un dispositif de verrouillage. Le dispositif de verrouillage est composé d'un corps de manchon (3) cylindrique avec deux rainures (4) obliques à l'axe moyenne, fabriqué en matière flexible, des pointes de verrouillage (5) sont guidées dans les rainures (4) et s'enclenchent lors du verrouillage, sous la force d'un ressort à pression (6), dans la rainure de la prise de raccord (7), et le corps de manchon (3) est entouré d'une manchon qui agit contre la force du ressort (6) et qui est axialement déplaçable, le jeux des forces avec la douille (8) débloque la prise de raccord (2), **caractérisé par,** que dans le corps de manchon il existe un adaptateur (13) dont la matière est plus dure que la matière du corps de manchon (3), l'adaptateur est adapté au contour de la prise de raccord et **caractérisé par** des niches (11) qui permettent le glissement des pointes de verrouillage (5) et qui forment des butés pour celle-ci.

2. L'accouplement rapide du Droit 1 **est caractérisé par,** le fait que le corps de manchon (3) montre, en addition aux rainures (4), deux percées (9) opposées dans lesquelles les cames de capture (10) de l'adaptateur s'enclenchent.

3. L'accouplement rapide du Droit 1 **est caractérisé par,** le fait que l'adaptateur (13) possède en addition aux cames de capture (10) des avances (14) aigus disposées circulairement au diamètre extérieur (25) des deux cotés des niches (11), vu en direction de l'axe, les avances (14) glissent dans les perçages (16) enfermant du corps de manchon.

4. L'accouplement rapide des Droits précédents **est caractérisé par,** le fait que les perçages (16) dans le corps de manchon pour l'admission de l'adaptateur (13) dans le secteur du côté d'introduction de l'adaptateur ne forme pas de cercle fermé, mais contient deux renflements (17) circulaire déplacé d'environ 90° aux percées (9).

5. L'accouplement rapide des Droits précédents **est caractérisé par,** le fait qu'il se trouve des élévations (19) segmentées éminentes en face des renflements (17), à l'ampleur (24) extérieure du corps de manchon dans la zone du côté d'introduction de la douille (8), sur lesquelles la douille (8) est pressé lors de l'assemblage contre son perçage (30) enfermant le corps de manchon.

6. L'accouplement rapide des Droits précédents **est caractérisé par,** le fait que les rainures (4) pénètrent certes le corps de manchon (3) en direction de libération, que toutefois dans le secteur de la hâte de formation un pont (23) est formé au-delà des rainures (4).

7. L'accouplement rapide des Droits précédents **est caractérisé par,** le fait que le corps de manchon (3) dans le secteur du côté d'introduction de l'adaptateur (13) montre un creux (21) hexagonal, qui sert comme prise pour l'hexagone de l'adaptateur (13).

8. L'accouplement rapide des Droits précédents **est caractérisé par,** le fait que l'adaptateur empêche axialement que le joint (22) d'étanchéité entre corps de manchon et prises de raccord tombe.

9. L'accouplement rapide des Droits 1 à 6 et 8 **est caractérisé par** le fait que, l'adaptateur n'est pas seulement introduit dans la direction de l'axe du corps de manchon (3), mais, comme un joint à baïonnette, d'abord dans la direction de l'axe et en suite par rotation de l'adaptateur, les cames de capture (10) s'enclenchent dans les percées (9) du corps de manchon.
